# EUROPÄISCHE PATENTSCHRIFT

(11) **EP 3 798 052 B1**
(45) Veröffentlichungstag und Bekanntmachung des Hinweises auf die Patenterteilung: **14.02.2024**
(21) Anmeldenummer: 20197834.3
(22) Anmeldetag: 23.09.2020
(51) Int. Cl.: B60N 2/894, B60N 2/60, B60N 2/56, B60N 2/882, B60N 2/90

(54) **FAHRZEUGSITZ-AUFLAGE UND FAHRZEUGSITZ**
VEHICLE SEAT SUPPORT AND VEHICLE SEAT
SUPPORT DE SIÈGE DE VÉHICULE ET SIÈGE DE VÉHICULE

(30) Priorität: 24.09.2019 DE 202019105274 U
(43) Veröffentlichungstag der Anmeldung: 31.03.2021
(73) Patentinhaber: Faurecia Autositze GmbH, 31655 Stadthagen (DE)
(72) Erfinder: Heiden, Sascha, 30855 Langenhagen (DE); Urban, Frank, 31655 Stadthagen (DE)
(74) Vertreter: REHBERG HÜPPE + PARTNER

(56) Entgegenhaltungen:
- FR-A1- 3 028 161
- JP-A- 2006 218 115
- JP-U- H01 143 998

## Beschreibung

### TECHNISCHES GEBIET DER ERFINDUNG

Die Erfindung betrifft eine Fahrzeugsitz-Auflage, welche für eine lösbare Befestigung an einem Fahrzeugsitz bestimmt ist. Bei der Fahrzeugsitz-Auflage handelt es sich um eine Rückenlehnen-Auflage wie beispielsweise eine Heiz- und/oder Massagematte oder eine Schon- oder Schutzauflage.

Des Weiteren betrifft die Erfindung einen Fahrzeugsitz mit einer derartigen Fahrzeugsitz-Auflage.

### STAND DER TECHNIK

Die nicht gattungsgemäße Druckschrift US 2006/0087163 A1 betrifft eine Befestigung eines Unterhaltungsgeräts wie eines Video-Systems, DVD-Systems und/oder eines Audio-Systems über eine starre Konsole an Kopfstützenstangen einer Kopfstütze eines Fahrzeugsitzes. Das Unterhaltungsgerät ist auf der Rückseite des Fahrzeugsitzes angeordnet, so dass das Unterhaltungsgerät im Sichtbereich eines hinter dem Fahrzeugsitz auf einer Rückbank sitzenden Passagiers angeordnet ist. Für ein erstes Ausführungsbeispiel verfügt die Konsole auf der Vorderseite über zwei Hakenelemente, die in dieselbe Querrichtung eine Öffnung aufweisen und deren Abstand dem Abstand der Kopfstützenstangen des Fahrzeugsitzes entspricht. Durch eine Querbewegung können die Kopfstützenstangen in die Konsole eingeschoben werden, wobei die Kopfstützenstangen gleichzeitig über die Öffnungen in von den Hakenelementen gebildete Ausnehmungen eintreten. Die Hakenelemente können im Bereich der Öffnungen Verengungen der Ausnehmungen bilden, so dass mit dem Eintritt der Kopfstützenstangen in die Öffnungen die Hakenelemente elastisch aufgeweitet werden müssen. In vertikaler Richtung kann die Konsole mit den Hakenelementen gefangen sein zwischen einer Oberseite der Rückenlehne und parallel hierzu orientierten Flanschen der Führungen der Rückenlehne für die Kopfstützenstangen. Für das Lösen der Konsole von den Kopfstützenstangen ist eine umgekehrte relative Querbewegung erforderlich, wobei die Kopfstützenstangen unter elastischer Aufweitung der Hakenelemente aus den Ausnehmungen der Konsole austreten. Die eigensteife Konsole bildet auf der Rückseite des Fahrzeugsitzes eine vertikale Abwinklung, an der das Unterhaltungsgerät befestigt ist. Die Einführbewegung der Kopfstützenstangen in die Ausnehmungen der Konsole werden geführt durch eine in die Ausnehmung führende Stirnkante der Konsole, die derart konturiert ist, dass neben der reinen Querbewegung auch eine Bewegung der Konsole in Fahrzeuglängsrichtung erforderlich ist, was ein unbeabsichtigtes Lösen der Konsole und damit des Unterhaltungsgeräts von der Rückenlehne erschweren soll. Zusätzlich kann eine Befestigung des Unterhaltungsgeräts über eine auf der Rückseite des Fahrzeugsitzes angeordnete, sich vertikal erstreckende Strebe an einem inneren Rahmen der Rückenlehne erfolgen. Für weitere aus US 2006/0087163 A1 bekannte Ausführungsformen erfolgt anstelle des Einsatzes der Hakenelemente ein Einsatz von gegen die Wirkung von Federn verschwenkbaren Paaren von Hakenelementen, ein Einsatz von Bohrungen der Konsole, durch die die Kopfstützenstangen für demontierte Kopfstütze hindurchgeführt werden können, ein Einsatz von separaten U-förmigen Halteelementen, die in den Endbereichen der Seitenschenkel des U lösbar mit der Konsole montiert werden können oder ein Einsatz von mit der Konsole verschraubbaren U-förmigen Halteelementen.

Die nicht gattungsgemäße Druckschrift DE 10 2006 022 016 B3 schlägt eine Halte- und Führungseinrichtung für eine Kopfstütze vor. Vor der Montage des Fahrzeugsitzes im Innenraum eines Fahrzeugs ist die Kopfstütze mit den Kopfstützenstangen lediglich über einen Bowdenzug mit einer Halte- und Führungseinrichtung für die Kopfstützenstangen in der Rückenlehne des Fahrzeugsitzes verbunden, wobei in diesem Zustand die Kopfstütze mit den Kopfstützenstangen in nach unten gekippten Zustand durch den Bowdenzug an der Halte- und Führungseinrichtung gehalten ist. Neben dem Halten der Kopfstütze mit den Kopfstützenstangen dient die Halte- und Führungseinrichtung auch der Führung des Bowdenzuges. Die Halte- und Führungseinrichtung ist eigensteif ausgebildet und besitzt eine obere Abwinklung, im Bereich welcher die Halte- und Führungseinrichtung auf der Oberseite der Rückenlehne aufliegt. Die Abwinklung bildet Laschen oder Haken aus, über die Halte- und Führungseinrichtung lösbar an Führungshülsen der Rückenlehne für die Kopfstützenstangen gehalten werden kann, was durch Klemmung und Formschluss erfolgen soll. Ist ein Fahrzeugsitz mit dem an der Halte- und Führungseinrichtung über den Bowdenzug gehaltenen Kopfstütze durch eine Fahrzeugtür in das Innere des Fahrzeugs eingebracht und der Fahrzeugsitz an dem Fahrzeugchassis montiert, kann die Kopfstütze aus der Halte- und Führungseinrichtung herausgenommen werden und mit dem Bowdenzug und den Kopfstützenstangen in die Führungen der Rückenlehne eingesetzt werden. Alternativ zu einem Bowdenzug kann auch eine Verbindung über ein elektrisches Kabel, eine hydraulische Schlauchleitung oder eine pneumatische Schlauchleitung erfolgen. Nach der Montage der Kopfstütze mit der Rückenlehne kann dann die Halte- und Führungseinrichtung entfernt werden.

Die nicht gattungsgemäße Druckschrift US 2017/0361739 A1 offenbart eine Abdeckung für eine Kopfstütze eines Fahrzeugsitzes. In einem unteren Endbereich besitzt die Abdeckung randgeschlossene Ausnehmungen, in die die Kopfstützenstangen eingesteckt werden können. Bei derartiger Fixierung der Abdeckung an den Kopfstützenstangen kann dann die Abdeckung um die Vorderseite der Kopfstütze gespannt werden und in einem oberen Endbereich mittels eines Klettverschlusses an der Oberseite der Kopfstütze fixiert werden. Für eine andere Ausführungsform sind die Ausnehmungen in dem unteren Endbereich mit Randöffnungen ausgebildet, was auch eine Montage der Abdeckung an der Kopfstütze ermöglicht, wenn diese nicht aus der Rückenlehne herausgezogen wird.

US 2019/0009728 A1 betrifft eine auf einer Rückseite einer Rückenlehne eines Fahrzeugsitzes angeordnete Hutablage aus einem einstückigen, eigensteifen und im Bereich von Faltlinien faltbaren Material. Die Hutablage weist im oberen Endbereich einen einzigen Haken auf, über den der obere Endbereich der Hutablage mit einer Querbewegung in eine Kopfstützenstange eingehängt werden kann.

Weiterer Stand der Technik ist aus CN 207028949 U und CN 207657660 U bekannt.

Die den nächstliegenden Stand der Technik bildende Druckschrift FR 3 028 161 A1 offenbart einen Sitzbezug für einen Fahrzeugsitz, einen Autositz, ein Polstersitz oder einen Sitz für den professionellen Einsatz (Zahnarzt, Frisör, etc.). Der Sitzbezug verfügt für die lösbare Befestigung an einer Kopfstütze über zwei sich teilweise überlappende Lagen aus einem flexiblen Material (insbesondere Stoff, ein textiles Material, Vliesstoff, ein Folienmaterial oder ein elastisches Material). Für eine Ausführungsform verfügt eine Lage über einen bei der Montage an dem Fahrzeugsitz nach hinten offenen Ausschnitt, während die andere Lage einen in dem an dem Fahrzeugsitz montierten Zustand nach vorne offenen, halbkreisförmigen Ausschnitt aufweist. Die halbkreisförmigen Ränder der Ausschnitte überlappen derart, dass diese in einer Draufsicht eine randgeschlossene Öffnung bilden. Durch diese Öffnung können sich in montiertem Zustand die beiden Kopfstützenstangen erstrecken, wobei die Quererstreckung der Öffnung größer ist als der Abstand der Kopfstützenstangen. Durch Aufspreizen der Lagen und der Ausschnitte kann die Größe der Öffnung so vergrößert werden, dass der Schutzbezug mit der vergrößerten Öffnung von oben über die Kopfstütze gestülpt werden kann. Die beiden Lagen sind durch Nähte, Verkleben, Heißschmelzen oder Heißkleben, Ultraschallschweißen, Knöpfe oder Druckknöpfe, Klettverschlüsse oder einen Reißverschluss miteinander verbunden.

Die nicht gattungsgemäße Druckschrift JP H01-143998 U offenbart einen Schutzbezug für ein Kopfstützenpolster, welcher das Kopfstützenpolster vollständig umgibt und einschließt. Um das Überstülpen des Kopfstützenbezugs über das Kopfstützenpolster von oben zu ermöglichen, verfügt der Kopfstützenbezug auf der Unterseite über einen in Querrichtung durchgehenden Schlitz. Die den Schlitz begrenzenden Ränder verfügen jeweils über zwei halbkreisförmige Ausschnitte, durch welche sich in montiertem Zustand die Kopfstützenstangen erstrecken können. In dem montierten Zustand erfolgt eine Sicherung der geschlossenen Stellung des Schlitzes über eine Sicherungseinrichtung, die von eigensteifen länglichen Hakenelementen ausgebildet wird, die jeweils von den den Schlitz begrenzenden Rändern getragen werden.

### AUFGABE DER ERFINDUNG

Der Erfindung liegt die Aufgabe zugrunde, eine Fahrzeugsitz-Auflage vorzuschlagen, die lösbar an einem Fahrzeugsitz befestigt werden kann, wobei die Fahrzeugsitz-Auflage insbesondere hinsichtlich
- einer Vereinfachung eine Montage und/oder Demontage an dem Fahrzeugsitz und/oder
- einer Gewährleistung einer (beispielsweise während der Fahrt, während Bewegungen des Fahrers oder Passagiers auf dem Fahrzeugsitz und/oder während eines Crashs) Zuverlässigkeit der Befestigung an dem Fahrzeugsitz
verbessert ist. Des Weiteren liegt der Erfindung die Aufgabe zugrunde, einen Fahrzeugsitz mit einer Fahrzeugsitz-Auflage vorzuschlagen, welcher entsprechend verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Fahrzeugsitz-Auflage, die lösbar an einem Fahrzeugsitz befestigt werden kann. Die Fahrzeugsitz-Auflage verfügt über einen Befestigungsbereich. Im Bereich des Befestigungsbereichs kann die Fahrzeugsitz-Auflage an einer Kopfstützenstange des Fahrzeugsitzes befestigt werden. Ebenfalls möglich ist, dass die Fahrzeugsitz-Auflage in dem Befestigungsbereich an einer Führungseinrichtung für die Kopfstützenstange befestigt werden kann (vgl. die Führungen und Flansche der Rückenlehne für die Kopfstützenstangen gemäß US 2006/0087163 A1).

Erfindungsgemäß verfügt der Befestigungsbereich über zwei übereinander angeordnete Lagen. Diese Lagen sind biegeweich ausgebildet, so dass diese bei einer Montage und Demontage auf einfache Weise von dem Benutzer verformt werden können. Insbesondere sind die biegeweichen Lagen nicht eigensteif ausgebildet, sondern diese können ohne signifikante elastische Rückstellkräfte in unterschiedliche Geometrien gebracht werden. Vorzugsweise sind hierbei diese unterschiedlichen Geometrien der Lagen ohne Rückstellkräfte stabil, so dass die Lagen nach der Verformung in der jeweiligen Geometrie verbleiben können. Um lediglich die Erfindung nicht beschränkende Beispiele zu nennen, können die Lagen aus einem Textilmaterial, einem Gewebe, Gewirke, Flies, netzartigen Material u. ä. hergestellt werden, wobei die Lagen auch aus mehreren Schichten und mehreren Bestandteilen bestehen können, wobei die Lagen auch plastisch verformbare Verstärkungselemente aufweisen können. Die Erfindung umfasst aber auch Lagen, welche eigensteife Teilbereiche aufweisen, die dann über biegeweiche Teilbereiche oder Faltkanten miteinander verbunden sind.

Erfindungsgemäß weisen die Lagen jeweils zwei Ausnehmungen auf, die für die Aufnahme der Kopfstützenstangen oder Führungseinrichtungen bestimmt sind, so dass die Dimensionierung der Ausnehmungen entsprechend der Geometrie der Kopfstützenstange oder Führungseinrichtung erfolgt. Die Ausnehmungen der beiden Lagen weisen jeweils eine Randöffnung auf, über die Kopfstützenstangen oder Führungseinrichtungen in die Ausnehmungen der jeweiligen Lage einführbar ist.

Die Randöffnung muss dabei einerseits möglichst einfach zugänglich sein, um ein einfaches Einführen der Kopfstützenstange oder Führungseinrichtung zu ermöglichen. Dies spricht grundsätzlich für eine große Dimensionierung der Randöffnung. Andererseits soll aber möglichst ein unerwünschter Austritt der Kopfstützenstange oder Führungseinrichtung aus der Ausnehmung vermieden werden, wozu die Randöffnung möglichst klein gewählt werden müsste. Diesen Zielkonflikt löst die Erfindung dadurch auf, dass in einer erfindungsgemäßen Fahrzeugsitz-Auflage eine Randöffnung einer Lage in einer Draufsicht (oder in einer Projektion in Richtung der Längsachse der Kopfstützenstange) durch einen Rand einer Ausnehmung der anderen Lage (teilweise oder vollständig) abgedeckt ist. Dies hat für eine mögliche Ausgestaltung der Erfindung zur Folge, dass grundsätzlich die Randöffnung der erstgenannten Lage verhältnismäßig groß gewählt werden kann, so dass eine einfache Montage dieser Lage an der Kopfstützenstange oder Führungseinrichtung ermöglicht ist, wenn die andere Lage so verformt ist, dass der Rand der Ausnehmung der anderen Lage noch nicht die Randöffnung der erstgenannten Lage abdeckt. Wird dann die andere Lage in die abdeckende Geometrie überführt (und tritt dabei die Kopfstützenstange oder Führungseinrichtung auch durch die Randöffnung in die Ausnehmung der anderen Lage ein), kann der Rand der Ausnehmung der anderen Lage die Randöffnung der erstgenannten Lage kleiner machen oder vollständig schließen, wodurch der unbeabsichtigte Austritt der Kopfstützenstange oder Führungseinrichtung aus der Randöffnung der erstgenannten Lage zumindest erschwert ist. Das Entsprechende gilt umgekehrt auch für die Randöffnungen der Ausnehmungen der zweitgenannten Lage, die durch Ränder der Ausnehmungen der erstgenannten Lage (teilweise oder vollständig) abgedeckt sein kann.

Möglich ist beispielsweise, dass die Ausnehmungen in dem montierten Zustand eine fluchtende Gesamt-Ausnehmung ausbilden, durch die sich die Kopfstützenstange oder Führungseinrichtung erstreckt. In diesem montierten Zustand sind dann die beiden Randöffnungen der Lagen nicht übereinander angeordnet, sondern in Umfangsrichtung um die Gesamt-Ausnehmung versetzt zueinander angeordnet, wobei diese beispielsweise auch auf gegenüberliegenden Seiten von der Gesamt-Ausnehmung angeordnet sein können.

Erfindungsgemäß weisen die Lagen jeweils zwei Ausnehmungen mit Randöffnungen auf, die dann jeweils für eine zugeordnete Kopfstützenstange oder Führungseinrichtung bestimmt sind, so dass die Fahrzeugsitz-Auflage dann an beiden Kopfstützenstangen oder Führungseinrichtungen gehalten ist und beispielsweise die Sicherungswirkung erhöht wird und/oder auch eine besonders gute Vorgabe einer Lage und Orientierung der Fahrzeugsitz-Auflage relativ zu dem Fahrzeugsitz gewährleistet ist.

Erfindungsgemäß handelt es sich bei der Fahrzeugsitz-Auflage um eine Rückenlehnen-Auflage, die vorzugsweise auf der Vorderseite auf die Rückenlehne des Fahrzeugsitzes aufgelegt ist.

Für einen Vorschlag der Erfindung weist der Befestigungsbereich eine biegeweiche obere Lage mit einer oberen Ausnehmung auf. Des Weiteren verfügt der Befestigungsbereich über eine biegeweiche untere Lage mit einer unteren Ausnehmung. Die Ausnehmungen bilden in diesem Fall eine obere Randöffnung und eine untere Randöffnung aus. In montiertem Zustand sind die obere Lage und die untere Lage so übereinander angeordnet (insbesondere unter Ausbildung einer (groß-)flächigen Kontaktfläche miteinander), dass sich die Kopfstützenstange oder die Führungseinrichtung durch die obere und die untere Ausnehmung (und die damit gebildete Gesamt-Ausnehmung) erstreckt. In einer Projektion in Richtung der Längsachse der Kopfstützenstange ist die untere Randöffnung der unteren Ausnehmung durch den Rand der oberen Ausnehmung der oberen Lage (teilweise oder vollständig) abgedeckt. Alternativ oder kumulativ möglich ist, dass in einer Projektion in Richtung der Längsachse der Kopfstützenstange die obere Randöffnung der oberen Ausnehmung durch den Rand der unteren Ausnehmung der unteren Lage (teilweise oder vollständig) abgedeckt ist.

Grundsätzlich können die Randöffnungen der beiden Ausnehmungen in beliebige Richtungen orientiert sein, solange diese Richtungen unterschiedlich sind, womit ein Eintritt der Kopfstützenstange oder Führungseinrichtung in die Ausnehmungen und ein Austritt aus diesen auch in unterschiedliche Richtungen erfolgt, was die gewünschte Sicherungswirkung herbeiführt.

Für einen Vorschlag der Erfindung sind die Randöffnungen in entgegengesetzte Querrichtungen orientiert. Somit kann die Kopfstützenstange oder Führungseinrichtung in eine Querrichtung in die Ausnehmung einer Lage eingeführt werden, während für das Einführen in die andere Lage eine entgegengesetzte Querbewegung erforderlich ist. Eine derartige Ausgestaltung führt insbesondere zu einer guten Sicherungswirkung, wenn eine Sicherung gegenüber in Längsrichtung wirkenden Kräften gewünscht ist.

Die Lagen können in beliebigen Teilbereichen miteinander verbunden sein. Vorzugsweise erfolgt eine Verbindung einer Lage lediglich in einem lateralen Seitenbereich mit der anderen Lage, was beispielsweise eine Art von "Aufklappen" der beiden Lagen für die Montage und/oder Demontage möglich macht.

Für die Art der Verbindung der beiden Lagen miteinander gibt es viele Möglichkeiten. Ohne dass eine Einschränkung der Erfindung auf diese Ausgestaltungen erfolgen soll, können die Lagen beispielsweise über eine Verklebung oder eine Naht miteinander verbunden sein.

Möglich ist, dass die Lagen der Fahrzeugsitz-Auflage lediglich über mindestens eine dauerhafte Verbindung miteinander verbunden sind, die für den Zusammenhalt und auch die Gewährleistung der Sicherungswirkung verantwortlich ist. Für einen besonderen Vorschlag der Erfindung sind die beiden Lagen in dem an dem Fahrzeugsitz montierten Zustand über eine zusätzliche lösbare Verbindung miteinander verbunden, bei welcher es sich beispielsweise um einen Klettverschluss handeln kann. Vorzugsweise bilden die beiden Lagen mit der festen Verbindung einerseits und der zusätzlichen lösbaren Verbindung andererseits einen geschlossenen Ring, in welchem dann die Kopfstützenstange oder Führungseinrichtung eingeschlossen ist.

Die Sicherungswirkung der Fahrzeugsitz-Auflage an dem Fahrzeugsitz kann zumindest teilweise darauf beruhen, dass eine Beseitigung der teilweisen oder vollständigen Abdeckung einer Randöffnung einer Ausnehmung einer Lage durch den Rand der Ausnehmung der anderen Lage erfordert, dass eine Relativbewegung der beiden aneinander anliegenden Lagen erforderlich ist, wozu die zwischen den Lagen wirkende Reibung zu überwinden ist. Dieser Beitrag zu der Sicherungswirkung kann für einen Vorschlag der Erfindung dadurch erhöht werden, dass mindestens eine Lage in einem Kontaktbereich zu der anderen Lage eine reibungserhöhende Beschichtung oder ein (beispielsweise flächiges) Reibelement aufweist.

Für eine weitere Lösung der der Erfindung zugrunde liegenden Aufgabe wird ein Fahrzeugsitz vorgeschlagen, der eine Rückenlehnen-Auflage aufweist, wie diese zuvor erläutert worden ist. Die Rückenlehnen-Auflage ist in dem Befestigungsbereich an mindestens einer Kopfstützenstange oder mindestens einer Führungseinrichtung befestigt. Die Rückenlehnen-Auflage erstreckt sich dann von dem Befestigungsbereich entlang der Vorderseite der Rückenlehne nach unten, wobei die Rückenlehnen-Auflage bis auf die Befestigung mittels des Befestigungsbereichs lose an dem Fahrzeugsitz anliegen kann oder mit zusätzlichen Befestigungsbereichen an diesem fixiert sein kann.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine obere Lage einer Fahrzeugsitz-Auflage in einer Draufsicht.
- **Fig. 2**: zeigt eine untere Lage einer Fahrzeugsitz-Auflage in einer Draufsicht.
- **Fig. 3**: zeigt in einer Draufsicht eine Fahrzeugsitz-Auflage mit der oberen Lage gemäß Fig. 1 und der unteren Lage gemäß Fig. 2.
- **Fig. 4 und 5**: zeigen in einer räumlichen Ansicht einen Fahrzeugsitz mit einer darauf teilmontierten (Fig. 4) und vollständig montierten (Fig. 5) Fahrzeugsitz-Auflage gemäß Fig. 3.
- **Fig. 6**: zeigt in einer räumlichen Ansicht einen Fahrzeugsitz mit einer weiteren Ausführungsform einer Fahrzeugsitz-Auflage.
- **Fig. 7**: zeigt in einer Draufsicht eine obere Lage einer weiteren Ausführungsform einer Fahrzeugsitz-Auflage.
- **Fig. 8**: zeigt in einer Draufsicht eine untere Lage einer weiteren Ausführungsform einer Fahrzeugsitz-Auflage.
- **Fig. 9**: zeigt in einer Draufsicht eine Fahrzeugsitz-Auflage mit der oberen Lage gemäß Fig. 7 und der oberen Lage gemäß Fig. 8.

### FIGURENBESCHREIBUNG

In den **Figuren** werden für Komponenten oder technische Details, welche sich hinsichtlich der konstruktiven Ausgestaltung und/oder Funktion entsprechen, teilweise dieselben Bezugszeichen verwendet, wobei diese dann durch einen ergänzenden Buchstaben a, b, ... voneinander unterschieden sein können. In diesem Fall kann auf diese Komponenten oder Details ohne Verwendung des zusätzlichen Buchstabens Bezug genommen werden, womit dann einzelne oder alle Komponenten oder Details gemeint sein können.

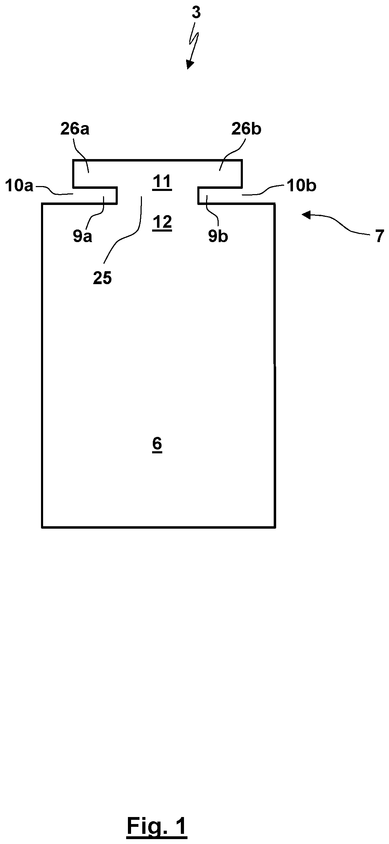

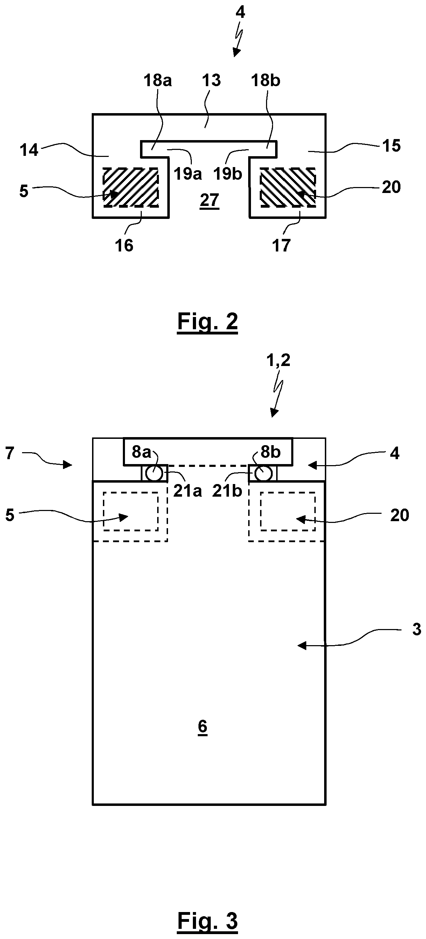

Eine Fahrzeugsitz-Auflage 1, die als Rückenlehnen-Auflage 2 ausgebildet ist, verfügt über eine obere Lage 3, die in einer Draufsicht in **Fig. 1** dargestellt ist, und eine untere Lage 4, die in einer Draufsicht in **Fig. 2** dargestellt ist. Die obere Lage 3 und die untere Lage 4 sind über eine Verbindung 5 (vorzugsweise fest und nicht lösbar) miteinander verbunden. Die obere Lage 3 verfügt über einen Funktionsbereich 6, der der Bereitstellung der eigentlichen Funktion der Fahrzeugsitz-Auflage 1 dient (beispielsweise der Abdeckung oder dem Schutz des Fahrzeugsitzes, einer Massagefunktion, einer Heizfunktion u. ä.). Des Weiteren verfügt die obere Lage 3 über einen Befestigungsbereich 7, im Bereich dessen einerseits die Verbindung der beiden Lagen 3, 4 erfolgt und andererseits die Befestigung der Fahrzeugsitz-Auflage 1 an mindestens einer Kopfstützenstange 8a, 8b erfolgt. Hierbei kann auch zumindest ein Teil des Befestigungsbereichs 7 der Bereitstellung der Funktion dienen, so dass auch eine teilweise oder vollständige Überlappung zwischen dem Funktionsbereich 6 und dem Befestigungsbereich 7 vorhanden sein kann.

Die obere Lage 3 verfügt in dem Befestigungsbereich 7 über Ausnehmungen 9a, 9b, welche jeweils eine Randöffnung 10a, 10b aufweisen. Die Ausnehmungen 9 verfügen dabei über einen Querschnitt, der dem Querschnitt der Kopfstützenstangen 8 entspricht oder mit einem gewissen Übermaß größer ist als dieser. Die Größe der Randöffnung 10 entspricht der Größe des Querschnitts der Kopfstützenstangen 8, so dass die Kopfstützenstangen 8 jeweils über die Randöffnung 10 in die Ausnehmung 9 eintreten können. Die Randöffnungen 10 sind in entgegengesetzt zueinander orientierte Richtungen orientiert, wobei diese in Fig. 1 in Querrichtung orientiert sind, womit die Kopfstützenstangen 8 in Querrichtung durch die Randöffnung 10 in die Ausnehmung 9 eintreten können und entgegengesetzte Richtung wieder aus der Ausnehmung 9 austreten können. Gemäß Fig. 1 sind die Randöffnungen 10 in Querrichtung nach außen orientiert.

Möglich ist, dass entsprechend Fig. 1 der Befestigungsbereich 7 der oberen Lage 3 einen T-förmigen Fortsatz 11 aufweist. Hierbei entspricht die Breite eines Vertikalschenkels 25 des T dem Zwischenraum zwischen den beiden Kopfstützenstangen 8a, 8b. Die Ausnehmungen 9 sind begrenzt durch den unteren Rand von Horizontalschenkeln 26a, 26b des T, den seitlichen Rand des Vertikalschenkels 25 des T und einen oberen Rand eines Grundkörpers 12 der oberen Lage 3, von welchem sich der T-förmige Fortsatz 11 erstreckt. Die Breite der Randöffnung10 entspricht dabei dem Abstand des unteren Rands der Horizontalschenkel 26a, 26b des T und des oberen Rands des Grundkörpers 12. Ohne dass dies zwingend der Fall ist, ist die Erstreckung der Horizontalschenkel 26a, 26b des T kleiner als die Quererstreckung des Grundkörpers 12 der oberen Lage 3. Die Quererstreckung der Horizontalschenkel 26 des T ist dabei mindestens so groß wie der äußere Abstand der Kopfstützenstangen 8a, 8b.

Gemäß Fig. 2 ist die untere Lage 4 in erster Näherung entsprechend einem umgekehrten U ausgestaltet mit einem Grundschenkel 13 und zwei parallelen, sich nach unten erstreckenden Seitenschenkeln 14, 15, welche in dem dem Grundschenkel 13 abgewandten Endbereich jeweils eine Abwinklung 16, 17 nach innen aufweisen. Die Abwinklungen 16, 17 sind parallel zum Grundschenkel 13 orientiert, wobei aber zwischen den Stirnseiten der Abwinklungen 16, 17 ein Zwischenraum 27 verbleibt. Die Quererstreckung des Zwischenraums 27 ist dabei vorzugsweise mindestens so groß wie der Innenabstand der beiden Kopfstützenstangen 8a, 8b. Zwischen dem Grundschenkel 13 und den Abwinklungen 16, 17 sind Ausnehmungen 18a, 18b gebildet, die jeweils eine Randöffnung 19a, 19b aufweisen. Die Ausnehmungen 18 sind begrenzt durch den oberen Rand der zugeordneten Abwinklung 16, 17, den innenliegenden Rand des zugeordneten Seitenschenkels 14, 15 und den unteren Rand des Grundschenkels 13. Die Breite der Randöffnung 19 ist vorgegeben durch den Abstand des oberen Rands der Abwinklung 16, 17 von dem Grundschenkel 13.

Für dieses Ausführungsbeispiel der Lagen 3, 4 der Fahrzeugsitz-Auflage 1 sind die Ausnehmungen 9, 18 mit Schlitzen konstanter und gleicher Breiten ausgebildet. Durchaus möglich ist, dass die Ausnehmungen 9, 18 mit Schlitzen beliebig variierender Breite ausgebildet sind, wobei beispielsweise die Breite der Schlitze im Bereich der Randöffnungen 10, 19 auch verringert sein kann bis hin zu einem Schlitz minimaler Schlitzbreite, womit dann die begrenzenden Kanten im Bereich der Randöffnung 10, 19 aneinander anstoßen können oder unmittelbar benachbart zueinander angeordnet sein können.

Zur Bildung der Fahrzeugsitz-Auflage 1 ist die obere Lage 3 über eine Verbindung 5 mit der unteren Lage 4 fest verbunden. Bei der Verbindung 5 kann es sich beispielsweise um eine Verklebung, eine Naht, eine Verklebung oder anderweitige stoffschlüssige Verbindung u. ä. handeln. Vorzugsweise befindet sich die Verbindung 5 im Bereich einer Abwinklung 16 der Lage 4 und im lateralen Randbereich des Grundkörpers 12 der Lage 3. Optional möglich ist, dass auch eine Verbindung der Lagen 3, 4 über eine lösbare Verbindung 20 erfolgt, bei welcher es sich beispielsweise um eine Klettverbindung handeln kann. Die Verbindung 20 kann beispielsweise im Bereich der anderen Abwinklung 17 der Lage 4 und im anderen lateralen Randbereich des Grundkörpers 12 der Lage 3 angeordnet sein.

In **Fig. 3** sind die durch die obere Lage 3 verdeckten Kanten der unteren Lage 4 gestrichelt dargestellt. In Fig. 3 ist zu erkennen, dass die Paare der Ausnehmungen 9a, 18a [bzw. 9b, 18b] in der Fahrzeugsitz-Auflage 1 eine Gesamt-Ausnehmung 21a [bzw. 21b] bilden, in welcher die Kopfstützenstangen 8a [bzw. 8b] angeordnet und in der Draufsicht eingeschlossen sind. In der Draufsicht gemäß Fig. 3 sind die Kopfstützenstangen 8a, 8b in sämtliche Richtungen in der Zeichenebene und Erstreckungsebene der Lagen 3, 4 von dem Material der Lagen 3, 4 eingeschlossen. So werden die Gesamt-Ausnehmungen 21 in der Draufsicht begrenzt
- durch die innenliegenden Ränder der Seitenschenkel 14, 15, den oberen Rand der Abwinklungen 16, 17 und den unteren Rand des Grundschenkels 13 der unteren Lage 4 und
- durch den unteren Rand des Horizontalschenkels 26a, 26b des T, einen seitlichen Rand des Vertikalschenkels 25 des T und den oberen Rand des Grundkörpers 12 der oberen Lage 3.

Die Lagen 3, 4 liegen unter Ausbildung einer Reibkraft aneinander an im Bereich von Kontaktflächen
- zwischen dem Horizontalschenkel 26 des T der oberen Lage 3 und dem Grundschenkel 13 der unteren Lage 4 und
- zwischen den Abwinklungen 16, 17 der unteren Lage 4 und den lateralen oberen Endbereichen des Grundkörpers 12 der oberen Lage 3.

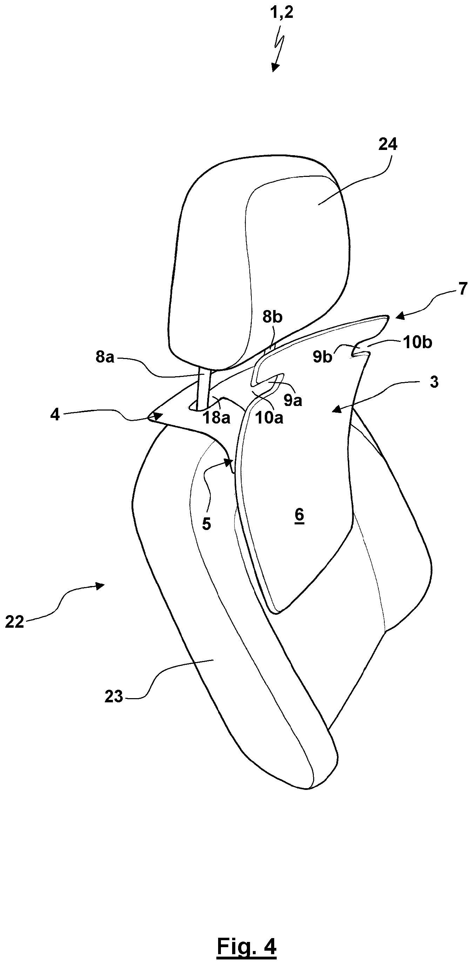

**Fig. 4** zeigt die Montage der Fahrzeugsitz-Auflage 1 an einem Fahrzeugsitz 22. Der Fahrzeugsitz 22 verfügt über eine Rückenlehne 23 und eine Kopfstütze 24, die über die Kopfstützenstangen 8a, 8b (insbesondere ausziehbar) an der Rückenlehne 23 gehalten ist.

Für die Montage werden die beiden Lagen 3, 4 abseits der Verbindung 5 voneinander getrennt und auseinandergeklappt. Zunächst wird die linke Kopfstützenstange 8a in die Ausnehmung 18a der Lage 4 eingeführt. Durch Verformung der unteren Lage 4 im Bereich des Grundschenkels 13, des Seitenschenkels 15 und/oder der Abwinklung 17 kann dann (bei in der Ausnehmung 18a angeordneter Kopfstützenstange 8a) auch die Kopfstützenstange 8b in die Ausnehmung 18b der Lage 4 eingeführt werden. Es erfolgt dann ein Überführen der unteren Lage 4 in einen ebenen Zustand, womit dann die Abwinklung 17 die Kopfstützenstange 8b umschließt. In diesem ebenen Zustand kommt die untere Lage 4, wie in Fig. 4 zu erkennen ist, zur Anlage auf der Oberseite der Rückenlehne 23. Hieran anschließend wird die obere Lage 3 ebenfalls nach hinten verformt, wobei vorzugsweise die Horizontalschenkel 26 des T so abgewinkelt werden, dass die Kopfstützenstangen 8a, 8b in die Ausnehmungen 9a, 9b eintreten können. Hieran anschließend werden die Horizontalschenkel 26 des T wieder in die Ebene zurückgeklappt, womit die Kopfstützenstangen 8a, 8b zwischen den Horizontalschenkeln 26 des T und dem Grundkörper 12 gefangen sind.

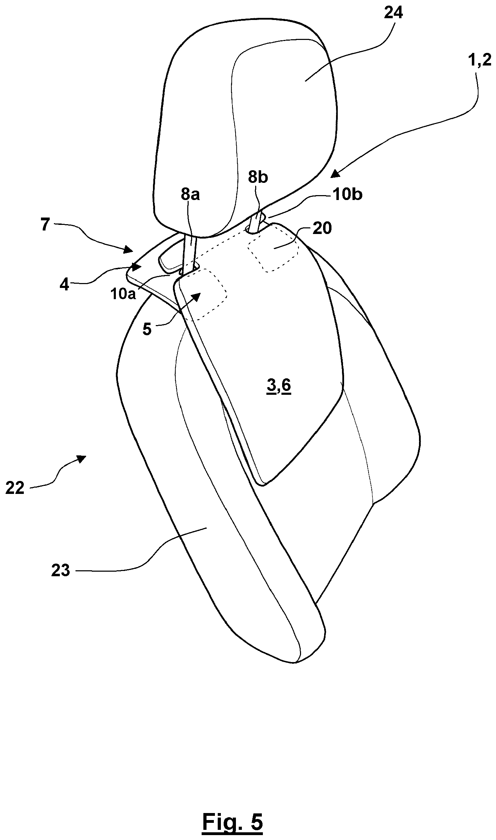

**Fig. 5** zeigt die montierte Stellung. In dieser montierten Stellung erstrecken sich die Kopfstützenstangen 8 durch die mit den Ausnehmungen 9, 18 gebildeten Gesamtausnehmungen 21 hindurch und die Kopfstützenstangen 8 sind in sämtliche Richtungen von dem Material der Lagen 3, 4 umgeben. Ein Austritt der Kopfstützenstangen 8 aus den Gesamt-Ausnehmungen 21 setzt eine Verformung zumindest einer der Lagen 3, 4 voraus, zu welcher die Reibung zwischen den Lagen 3, 4 zu überwinden ist und/oder eine Änderung der Geometrie durch eine Verformung mindestens einer der Lagen 3, 4 erforderlich ist. Erfolgt zusätzlich zu der Verbindung der Lagen 3, 4 über die Verbindung 5 auch eine Verbindung in dem montierten Zustand über eine lösbare Verbindung 20 wie einen Klettverschluss, bilden die Lagen 3, 4 einen geschlossenen, die beiden Kopfstützenstangen 8a, 8b umgebenden Ring.

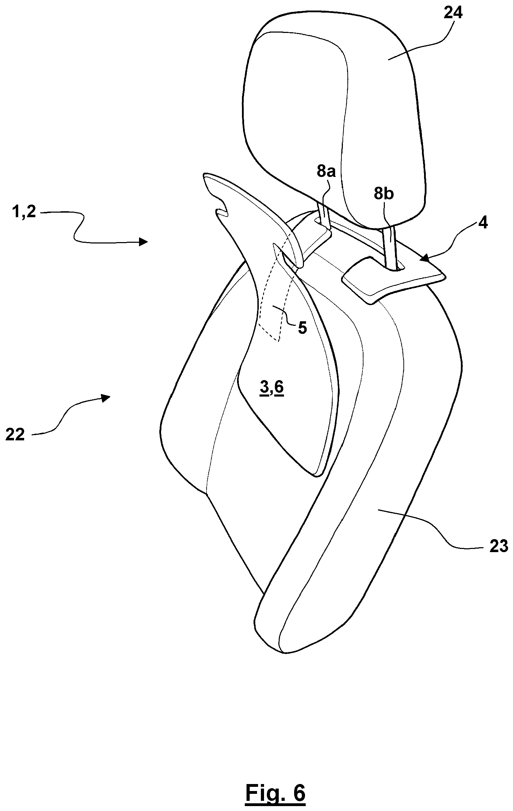

**Fig. 6** zeigt eine modifizierte Ausführungsform, bei welcher die obere Lage 3 der Fahrzeugsitz-Auflage 1 entsprechend Fig. 1 ausgebildet ist, aber die untere Lage 4 im Bereich der Abwinklung 16 eine größere Längserstreckung aufweist, so dass eine größere Fläche für die Verbindung 5 zur Verfügung steht oder auch eine Verbindung zwischen den beiden Lagen 3, 4 weiter entfernt von den Ausnehmungen 9, 18 erfolgen kann, was unter Umständen die Montage und Demontage weiter vereinfacht.

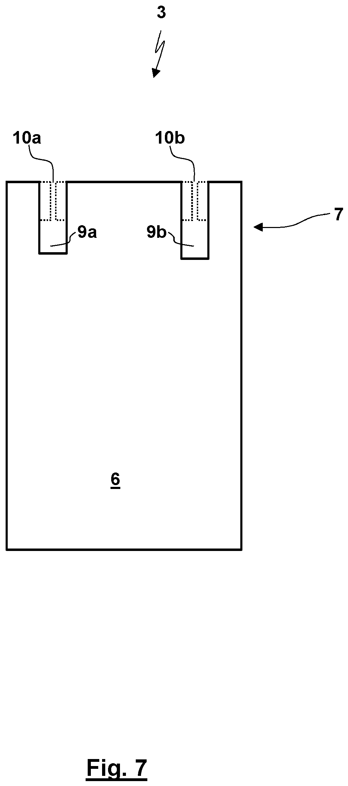

Für die Ausrichtung der Ausnehmungen 9, 18 und der zugeordneten Randöffnungen 10, 19 gibt es im Rahmen der Erfindung vielfältige Möglichkeiten. Exemplarisch ist in den **Fig. 7 bis 9** eine Ausführungsform dargestellt, bei welcher die Ausnehmungen 9a, 9b in Längsrichtung orientiert sind und die Randöffnungen 10a, 10b nach oben orientiert sind, während die Ausnehmungen 18a, 18b in Querrichtung orientiert sind und die Randöffnungen 19a, 19b lateral nach außen orientiert sind.

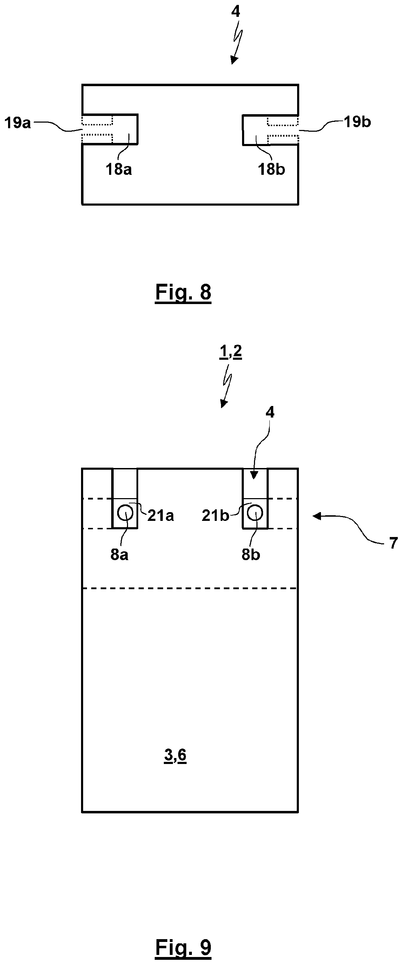

Gepunktet ist in **Fig. 7** **und** **8** eine alternative Konturierung der Ausnehmungen 9, 18 sowie der Randöffnungen 10, 19 dargestellt, für welche die Randöffnung 10, 19 gegenüber dem Querschnitt der Ausnehmung 9, 18 verjüngt ausgebildet ist und eine Breite des Schlitzes im Bereich der Randöffnungen 10, 19 minimiert ist.

Für den Fachmann ist ersichtlich, dass die Ausnehmungen 9, 18 und die zugeordneten Randöffnungen 10, 19 beliebig orientiert sein können, sofern die Randöffnungen 10, 19 relativ zueinander geneigt sind.

Des Weiteren ist möglich, dass die Lagen 3, 4 miteinander vertauscht sind, so dass eine hier als obere Lage 3 bezeichnete Lage bei derselben oder einer ähnlichen Geometrie tatsächlich eine untere Lage ist und eine als untere Lage 4 bezeichnete Lage bei derselben oder einer ähnlichen Geometrie eine obere Lage bildet.

Für das dargestellte Ausführungsbeispiel wird der Funktionsbereich 6 von der oberen Lage ausgebildet. Durchaus möglich ist aber auch, dass der Funktionsbereich 6 von der unteren Lage oder von beiden Lagen 3, 4 ausgebildet wird.

### BEZUGSZEICHENLISTE

- 1: Fahrzeugsitz-Auflage
- 2: Rückenlehnen-Auflage
- 3: obere Lage
- 4: untere Lage
- 5: feste Verbindung
- 6: Funktionsbereich
- 7: Befestigungsbereich
- 8: Kopfstützenstange
- 9: Ausnehmung
- 10: Randöffnung
- 11: Fortsatz
- 12: Grundkörper
- 13: Grundschenkel
- 14: Seitenschenkel
- 15: Seitenschenkel
- 16: Abwinklung
- 17: Abwinklung
- 18: Ausnehmung
- 19: Randöffnung
- 20: lösbare Verbindung
- 21: Gesamt-Ausnehmung
- 22: Fahrzeugsitz
- 23: Rückenlehne
- 24: Kopfstütze
- 25: Vertikalschenkel
- 26: Horizontalschenkel
- 27: Zwischenraum

## Patentansprüche

1. Fahrzeugsitz-Auflage (1), welche für eine lösbare Befestigung an einem Fahrzeugsitz (22) bestimmt ist,
a) mit einem Befestigungsbereich (7), im Bereich dessen die Fahrzeugsitz-Auflage (1) an Kopfstützenstangen (8a, 8b) des Fahrzeugsitzes (22) oder Führungseinrichtungen für die Kopfstützenstange (8) befestigt werden kann,
b) wobei der Befestigungsbereich (7) zwei biegeweiche Lagen (3, 4) aufweist, die jeweils zwei Ausnehmungen (9a, 9b, 18a, 18b) für die Aufnahme der Kopfstützenstangen (8) oder Führungseinrichtungen aufweisen,
c) die Ausnehmungen (9a, 9b, 18a, 18b) der beiden Lagen (3, 4) jeweils eine Randöffnung (10a, 10b, 19a, 19b) aufweisen und
d) die Randöffnungen (10a, 10b) einer Lage (3) in einer Draufsicht jeweils durch einen Rand der Ausnehmungen (18a, 18b) der anderen Lage (4) teilweise oder vollständig abgedeckt ist,
e) die Fahrzeugsitz-Auflage (1) eine Rückenlehnen-Auflage (2) ist,
f) wobei die Ausnehmungen (9a, 9b, 18a, 18b) mit Randöffnungen (10a, 10b, 19a, 19b) jeweils für eine zugeordnete Kopfstützenstange (8a, 8b) oder Führungseinrichtung bestimmt sind, wobei die Kopfstützenstangen (8a, 8b) oder Führungseinrichtungen jeweils über die Randöffnungen (10a, 10b, 19a, 19b) in die Ausnehmungen (9a, 9b, 18a, 18b) der jeweiligen Lage (3, 4) einführbar sind.

2. Fahrzeugsitz-Auflage (1) nach Anspruch 1, **dadurch gekennzeichnet, dass** die Randöffnungen (10a, 10b, 19a, 19b) auf gegenüberliegenden Seiten angeordnet sind.

3. Fahrzeugsitz-Auflage (19 nach Anspruch 1 oder 2, **dadurch gekennzeichnet, dass**
a) der Befestigungsbereich (7) eine biegeweiche obere Lage (3) aufweist, die obere Ausnehmungen (9a, 9b) aufweist,
b) der Befestigungsbereich (7) eine biegeweiche untere Lage (4) aufweist, die eine untere Ausnehmungen (18a, 18b) aufweist,
c) die oberen Ausnehmungen (9a, 9b) randoffen ausgebildet sind, indem diese obere Randöffnungen (10a, 10b) aufweisen, und die unteren Ausnehmungen (18a, 18b) randoffen ausgebildet sind, indem diese untere Randöffnungen (19a, 19b) aufweisen, und
d) die obere Lage (3) und die untere Lage (4) in dem montierten Zustand so übereinander angeordnet sind, dass
da) sich die Kopfstützenstangen (8a, 8b) oder die Führungseinrichtungen durch die oberen Ausnehmungen (9a, 9b) und die unteren Ausnehmungen (18a, 18b) erstrecken und
db) in einer Projektion in Richtung einer Längsachse der Kopfstützenstange (8a, 8b)
- die unteren Randöffnungen (19a, 19b) der unteren Ausnehmungen (18a, 18b) durch die Ränder der oberen Ausnehmungen (9a, 9b) der obere Lage (3) teilweise oder vollständig abgedeckt sind und/oder
- die oberen Randöffnungen (10a, 10b) der oberen Ausnehmungen (9a, 9b) durch die Ränder der unteren Ausnehmungen (18a, 18b) der unteren Lage (4) teilweise oder vollständig abgedeckt sind.

4. Fahrzeugsitz-Auflage (1) nach einem der vorhergehenden Ansprüche, **dadurch gekennzeichnet, dass** die Randöffnungen (10a, 10b, 19a, 19b) in entgegengesetzte Querrichtungen orientiert sind.

5. Fahrzeugsitz-Auflage (1) nach einem der vorhergehenden Ansprüche, **dadurch gekennzeichnet, dass** eine Lage (4) lediglich über ein Verbindung (5) im lateralen Seitenbereich mit der anderen Lage (3) verbunden ist.

6. Fahrzeugsitz-Auflage (1) nach einem der vorhergehenden Ansprüche, **dadurch gekennzeichnet, dass** die Lagen (3, 4) über eine Verklebung oder eine Naht miteinander verbunden sind.

7. Fahrzeugsitz-Auflage (1) nach einem der vorhergehenden Ansprüche, **dadurch gekennzeichnet, dass** die Lagen (3, 4) in dem an dem Fahrzeugsitz (22) montierten Zustand über einen zusätzliche lösbare Verbindung (20) miteinander verbindbar sind.

8. Fahrzeugsitz-Auflage (1) nach einem der vorhergehenden Ansprüche, **dadurch gekennzeichnet, dass** mindestens eine Lage (3, 4) in einem Kontaktbereich der beiden Lagen (3, 4) eine reibungserhöhende Beschichtung oder ein Reibelement aufweist.

9. Fahrzeugsitz (22) mit einer als Rückenlehnen-Auflage (2) ausgebildeten Fahrzeugsitz-Auflage (1) nach einem der vorhergehenden Ansprüche, **dadurch gekennzeichnet, dass** die Rückenlehnen-Auflage (2) in dem Befestigungsbereich (7) an den Kopfstützenstangen (8a, 8b) oder Führungseinrichtungen befestigt ist und sich die Rückenlehnen-Auflage (2) von dem Befestigungsbereich (7) entlang der Vorderseite einer Rückenlehne (23) nach unten erstreckt.

## Claims

1. A vehicle seat overlay (1) which is determined for detachable fastening to a vehicle seat (22),
a) with an attachment area (7), in the area of which the vehicle seat overlay (1) can be fastened to headrest rods (8a, 8b) of the vehicle seat (22) or guide devices for the headrest rod (8),
b) wherein the attachment area (7) has two flexible layers (3, 4), each of which has two recesses (9a, 9b, 18a, 18b) for receiving the headrest rods (8) or guide devices,
c) the recesses (9a, 9b, 18a, 18b) of the two layers (3, 4) each have an edge opening (10a, 10b, 19a, 19b) and
d) the edge openings (10a, 10b) of one layer (3) are each partially or completely covered in a plan view by an edge of the recesses (18a, 18b) of the other layer (4),
e) the vehicle seat overlay (1) is a backrest overlay (2),
f) wherein the recesses (9a, 9b, 18a, 18b) with edge openings (10a, 10b, 19a, 19b) are each determined for an associated headrest rod (8a, 8b) or guide device, wherein the headrest rods (8a, 8b) or guide devices can each be inserted into the recesses (9a, 9b, 18a, 18b) of the respective layer (3, 4) via the edge openings (10a, 10b, 19a, 19b).

2. The vehicle seat overlay (1) according to claim 1, **characterized in that** the edge openings (10a, 10b, 19a, 19b) are arranged on opposite sides.

3. The vehicle seat overlay (19 according to claim 1 or 2, **characterized in that**
a) the attachment area (7) has a flexible upper layer (3) which has upper recesses (9a, 9b),
b) the attachment area (7) has a flexible lower layer (4) which has a lower recess (18a, 18b),
c) the upper recesses (9a, 9b) are open-edged **in that** they have upper edge openings (10a, 10b), and the lower recesses (18a, 18b) are open-edged **in that** they have lower edge openings (19a, 19b), and
d) the upper layer (3) and the lower layer (4) are arranged on top of each other in the assembled state in such a manner that
da) the headrest rods (8a, 8b) or the guide devices extend through the upper recesses (9a, 9b) and the lower recesses (18a, 18b) and
db) in a projection in the direction of a longitudinal axis of the headrest rod
- (8a, 8b) the lower edge openings (19a, 19b) of the lower recesses (18a, 18b) are partially or completely covered by the edges of the upper recesses (9a, 9b) of the upper layer (3) and/or
- the upper edge openings (10a, 10b) of the upper recesses (9a, 9b) are partially or completely covered by the edges of the lower recesses (18a, 18b) of the lower layer (4).

4. The vehicle seat overlay (1) according to any of the preceding claims, **characterized in that** the edge openings (10a, 10b, 19a, 19b) are oriented in opposite transverse directions.

5. The vehicle seat overlay (1) according to any of the preceding claims, **characterized in that** one layer (4) is connected to the other layer (3) only via a connection (5) in the lateral side region.

6. The vehicle seat overlay (1) according to any of the preceding claims, **characterized in that** the layers (3, 4) are connected to one another by means of an adhesive bond or a seam.

7. The vehicle seat overlay (1) according to any of the preceding claims, **characterized in that** in the state mounted on the vehicle seat (22), the layers (3, 4) can be connected to one another via an additional detachable connection (20).

8. The vehicle seat overlay (1) according to any of the preceding claims, **characterized in that** at least one layer (3, 4) has a friction-enhancing coating or a friction element in a contact area of the two layers (3, 4).

9. The vehicle seat (22) with a vehicle seat overlay (2) designed as a backrest overlay (1) according to any of the preceding claims, **characterized in that** the backrest overlay (2) is fastened in the attachment area (7) to the headrest rods (8a, 8b) or guide devices and the backrest overlay (2) extends downwards from the attachment area (7) along the front of a backrest (23).

## Revendications

1. Coussin de siège de véhicule (1), qui est conçu pour une fixation amovible à un siège de véhicule (22),
a) comportant une zone de fixation (7), dans la zone de laquelle le coussin de siège de véhicule (1) peut être fixé à des tiges d'appui-tête (8a, 8b) du siège de véhicule (22) ou des dispositifs de guidage pour les tiges d'appui-tête (8),
b) dans lequel la zone de fixation (7) présente deux couches souples (3, 4), qui présentent respectivement deux évidements (9a, 9b, 18a, 18b) pour la réception des tiges d'appui-tête (8) ou des dispositifs de guidage,
c) les évidements (9a, 9b, 18a, 18b) des deux couches (3, 4) présentent respectivement une ouverture de bord (10a, 10b, 19a, 19b) et
d) les ouvertures de bord (10a, 10b) d'une couche (3) dans une vue de dessus sont respectivement recouvertes par un bord des évidements (18a, 18b) de l'autre couche (4) partiellement ou totalement,
e) le coussin de siège de véhicule (1) est un coussin de dossier (2),
f) dans lequel les évidements (9a, 9b, 18a, 18b) comportant des ouvertures de bord (10a, 10b, 19a, 19b) sont respectivement conçus pour une tige d'appui-tête (8a, 8b) ou un dispositif de guidage associé(e), dans lequel les tiges d'appui-tête (8a, 8b) ou les dispositifs de guidage peuvent respectivement être introduits par l'intermédiaire des ouvertures de bord (10a, 10b, 19a, 19b) dans les évidements (9a, 9b, 18a, 18b) des couches respectives (3, 4).

2. Coussin de siège de véhicule (1) selon la revendication 1, **caractérisé en ce que** les ouvertures de bord (10a, 10b, 19a, 19b) sont agencées sur des côtés opposés.

3. Coussin de siège de véhicule (19 selon la revendication 1 ou 2, **caractérisé en ce que**
a) la zone de fixation (7) présente une couche supérieure souple (3), qui présente l'évidement supérieur (9a, 9b),
b) la zone de fixation (7) présente une couche inférieure souple (4), qui présente un évidement inférieur (18a, 18b),
c) les évidements supérieurs (9a, 9b) sont conçus avec un bord ouvert, **en ce qu'**ils présentent des ouvertures de bord supérieures (10a, 10b), et les évidements inférieurs (18a, 18b) sont conçus avec un bord ouvert, **en ce qu'**ils présentent des ouvertures de bord inférieures (19a, 19b), et
d) la couche supérieure (3) et la couche inférieure (4) sont agencées l'une sur l'autre dans l'état monté de sorte que
da) les tiges d'appui-tête (8a, 8b) ou les dispositifs de guidage s'étendent à travers les évidements supérieurs (9a, 9b) et les évidements inférieurs (18a, 18b) et
db) dans une projection en direction d'un axe longitudinal des tiges d'appui-tête
- (8a, 8b) les ouvertures de bord inférieures (19a, 19b) des évidements inférieurs (18a, 18b) sont recouvertes par les bords des évidements supérieurs (9a, 9b) de la couche supérieure (3) partiellement ou totalement et/ou
- les ouvertures de bord supérieures (10a, 10b) des évidements supérieurs (9a, 18b) sont recouvertes par les bords des évidements inférieurs (18a, 9b) de la couche inférieure (4) partiellement ou totalement.

4. Coussin de siège de véhicule (1) selon l'une des revendications précédentes, **caractérisé en ce que** les ouvertures de bord (10a, 10b, 19a, 19b) sont orientées dans des directions transversales opposées.

5. Coussin de siège de véhicule (1) selon l'une des revendications précédentes, **caractérisé en ce qu'**une couche (4) est reliée uniquement par l'intermédiaire d'une liaison (5) dans la zone de côté latérale avec l'autre couche (3).

6. Coussin de siège de véhicule (1) selon l'une des revendications précédentes, **caractérisé en ce que** les couches (3, 4) sont reliées par l'intermédiaire d'un collage ou d'une couture l'une avec l'autre.

7. Coussin de siège de véhicule (1) selon l'une des revendications précédentes, **caractérisé en ce que** les couches (3, 4) dans l'état monté sur le siège de véhicule (22) sont reliées par l'intermédiaire d'une liaison supplémentaire amovible (20) l'une avec l'autre.

8. Coussin de siège de véhicule (1) selon l'une des revendications précédentes, **caractérisé en ce qu'**au moins une couche (3, 4) présente dans une zone de contact des deux couches (3, 4) un revêtement augmentant le frottement ou un élément de frottement.

9. Siège de véhicule (22) comportant un coussin de siège de véhicule (1) selon l'une des revendications précédentes conçu comme un coussin de dossier (2), **caractérisé en ce que** le coussin de dossier (2) est fixé dans la zone de fixation (7) aux tiges d'appui-tête (8a, 8b) ou dispositifs de guidage et le coussin de dossier (2) s'étend de la zone de fixation (7) le long du côté avant d'un dossier (23) vers le bas.
